# EUROPÄISCHE PATENTSCHRIFT

(11) **EP 3 781 828 B1**
(45) Veröffentlichungstag und Bekanntmachung des Hinweises auf die Patenterteilung: **04.08.2021**
(21) Anmeldenummer: 19719474.9
(22) Anmeldetag: 18.04.2019
(51) Int. Cl.: F16C 32/04, F01D 1/02, F01D 15/10, F02C 6/18, H02K 7/09, H02K 7/18

(54) **TURBINENGENERATOR SOWIE VERFAHREN ZUM BETRIEB EINES TURBINENGENERATORS**
TURBINE GENERATOR AND METHOD FOR OPERATING A TURBINE GENERATOR
GÉNÉRATEUR À TURBINES ET PROCÉDÉ D'OPÉRATION D'UN GÉNÉRATEUR À TURBINE

(30) Priorität: 20.04.2018 DE 102018206158
(43) Veröffentlichungstag der Anmeldung: 24.02.2021
(73) Patentinhaber: DEPRAG Schulz GmbH u. Co., 92224 Amberg (DE)
(72) Erfinder: PFEIFFER, Rolf, 92224 Amberg (DE); ZINN, Gerd, 92242 Hirschau (DE)
(74) Vertreter: FDST Patentanwälte
(86) Internationale Anmeldenummer: PCT/EP2019/060033
(87) Internationale Veröffentlichungsnummer: WO 2019/202055

(56) Entgegenhaltungen:
- EP-A1- 0 150 320
- EP-A1- 0 695 873
- WO-A1-87/00360
- DE-A1-102008 035 086
- DE-C1- 10 005 246
- DE-T2- 69 827 318
- US-A1- 2013 170 943

## Beschreibung

Die Erfindung betrifft einen klein bauenden Turbinengenerator mit den Merkmalen des Oberbegriffs des Anspruchs 1. Die Erfindung betrifft weiterhin ein Verfahren zum Betrieb eines solchen klein bauenden Turbinengenerators mit den Merkmalen des Oberbegriffs des Anspruchs 11.

Ein derartiger Turbinengenerator ist beispielsweise in der EP 1 930 567 A2 beschrieben. Derartige Turbinengeneratoren werden von der Anmelderin unter dem Markennamen "GET" vertrieben. Aus der Informationsbroschüre der Anmelderin "GET Turbinengenerator - eine Innovation, die sich lohnt!" sind weitere Informationen zum Aufbau und zu Anwendungsgebieten solcher Turbinengeneratoren zu entnehmen.

Der Turbinengenerator dient zur Gewinnung von elektrischer Energie, speziell zur Energie(rück)gewinnung aus einem Medium, beispielsweise bei industriellen Prozessen. Der Turbinengenerator ist eine Baueinheit aus einer Entspannungsturbine, nachfolgend allgemein als Turbinenteil bezeichnet und einem Generator, nachfolgend allgemein als Generatorteil bezeichnet. Zur Gewinnung von Energie wird allgemein ein gasförmiges Medium durch den Turbinenteil geleitet und dadurch der Generatorteil zur Erzeugung von elektrischer Energie angetrieben. Es ist eine direkte Nutzung möglich, bei der unmittelbar ein Druckgefälle im Medium ausgenutzt wird. Daneben besteht auch die Möglichkeit einer indirekten Nutzung, bei der ein derartiger Turbinengenerator beispielsweise zur Energierückgewinnung aus Abwärme in einem geschlossenen Kreislaufprozess, beispielsweise in einem sogenannten ORC-Prozess (Organic Rankine Cycle) eingesetzt wird. Ein Anwendungsgebiet hierfür ist beispielsweise die Energierückgewinnung aus Abgas in einem Kraftfahrzeug, wie sie in der DE 10 2012 211 578 B4 beschrieben ist.

Die Turbinengeneratoren sind vergleichsweise klein bauend und für elektrische Leistungen von - je nach Anwendungsfall - größer oder gleich 30 kW bis maximal 300 kW ausgebildet. Der Durchmesser eines Turbinenrads des Turbinenteils liegt - je nach Anwendungsfall - über 50mm und unter 500 mm und insbesondere unter 400 mm. Die Gesamtlänge des Turbinengenerators, also die Länge in Axialrichtung des Turbinenteils zuzüglich der Länge des Generatorteils, liegt im Bereich zwischen 350mm und 1500mm.

Je nach Anwendungsfall werden kleine Turbinengeneratoren eingesetzt, deren elektrische Leistung lediglich im Bereich von 30 kW bis 200 kW liegen und bei denen das Turbinenrad entsprechend einen kleineren Durchmesser, beispielsweise zwischen 50 bis 400 mm aufweist. Je nach Anwendungsgebiet liegen die ausnutzbaren Druckdifferenzen des Mediums unter 1 bar, beginnen beispielsweise bei 0,2 bar und reichen bis maximal mehrere 10 bar, beispielsweise bis maximal 100 bar. Weiterhin liegen die Temperaturen der gasförmigen Medien, aus denen die Energie gewonnen wird, je nach Anwendungsgebiet in einem Bereich zwischen minus 50° und 400°C, typischerweise im Bereich zwischen 0° und 250°C.

Der Turbinengenerator zeichnet sich im Betrieb durch eine sehr hohe Drehzahl aus. Die Drehzahlen im Betrieb liegen dabei typischerweise über 4.000 U/min. Insbesondere liegt eine Betriebsdrehzahl, also eine Drehzahl, für die der Turbinengenerator ausgelegt ist und die im Betrieb auch erreicht wird, im Bereich zwischen 8.000 bis 40.000 U/min.

Für das durch den Turbinenteil strömende Medium werden in Abhängigkeit des speziellen Anwendungsgebiets unterschiedliche, teilweise auch aggressive Medien und beispielsweise auch Kältemittel eingesetzt.

Der Turbinenteil und der Generatorteil erstrecken sich entlang einer gemeinsamen Längsachse und sind typischerweise über eine gemeinsame Generatorwelle miteinander verbunden. Zwischen einem im Betrieb rotierenden Turbinenrad des Turbinenteils und einem feststehenden Gehäuseteil ist eine üblicherweise als Labyrinthdichtung ausgebildete Dichtanordnung angeordnet. Über Leckströme kann das den Turbinenteil durchströmende Medium in einen Innenraum des Generatorteils eindringen. Dies führt zum einen dazu, dass Bauteile des Generatorteils dem Medium ausgesetzt sind.

Weiterhin führt dies auch dazu, dass sich im Generatorteil ein Druck einstellt, welcher zwischen dem Druck an einem Einlass für das Medium und dem Druck an einem Auslass für das Medium des Turbinenteils liegt. Die Generatorwelle ist typischerweise mithilfe eines Axiallagers sowie mithilfe zweier Radiallager gelagert. Variierende Betriebszustände können zu einer Veränderung eines Druckunterschieds zwischen einer Vorderseite des Turbinenrads und einer zum Generatorteil orientierten Rückseite des Turbinenrads führen, wodurch eine variierende Axialkraft erzeugt wird. Die Axialkraft wird von dem Axiallager abgefangen.

Aus der US 2013/170943 A1 ist ein Turbinengenerator zu entnehmen, bei dem eine Generatorwelle mittels Magnetlager gelagert ist.

In der EP 0 150 320 A1, der DE 698 27 318 T2, der DE 100 05 246 C1 sowie der EP 0 695 873 A1 sind jeweils Magnetlager und deren Ansteuerung beschrieben.

Ausgehend hiervon liegt der Erfindung die Aufgabe zugrunde, einen zuverlässigen Betrieb eines Turbinengenerators auch bei variierenden Betriebszuständen zu ermöglichen.

Die Aufgabe wird gemäß der Erfindung gelöst durch einen kleinbauenden Turbinengenerator mit den Merkmalen des Anspruchs 1 sowie durch ein Verfahren zum Betrieb eines kleinbauenden Turbinengenerators mit den Merkmalen des Anspruchs 11. Die nachfolgend im Hinblick auf den Turbinengenerator angeführten Vorteile und bevorzugten Ausgestaltungen sind sinngemäß auch auf das Verfahren zu übertragen.

Der Turbinengenerator ist ausgelegt für Drehzahlen von größer 4.000 U/min. Er weist dabei die Abmessungen und Kenngrößen auf, wie sie eingangs in der Beschreibungseinleitung angegeben sind und ist auch für die dort beschriebenen Einsatzzwecke ausgelegt und wird dort eingesetzt. Speziell ist der Turbinengenerator für eine Betriebsdrehzahl im Bereich zwischen 8 000 und 40 000 U/min ausgelegt und wird im Betrieb auch bei derartigen Drehzahlen betrieben. Weiterhin weist ein Turbinenteil einen Durchmesser vorzugsweise im Bereich zwischen 50 mm und 500 mm auf.

Der Turbinengenerator weist den Turbinenteil sowie einen Generatorteil auf, die sich entlang einer Rotationsachse in einer Axialrichtung vom Turbinenteil zum Generatorteil erstrecken. Der Generatorteil weist einen rotierenden Teil sowie einen feststehenden Teil auf. Der Turbinenteil weist ein Turbinenrad sowie einen Einlass und einen Auslass für ein Medium auf, welches im Betrieb durch das Turbinenrad strömt. Der Turbinenteil ist bevorzugt als Radialturbine mit einem radialen Einlass und einem axialen Auslass ausgebildet oder alternativ als Axialturbine, bei dem sowohl der Einlass als auch der Auslass axial orientiert sind. Zwischen dem Turbinenteil und einem feststehenden (Gehäuse-)Teil -je nach Ausgestaltung entweder ein Gehäuseteil des Turbinenteils (z.B. bei einer Axialturbine) oder ein Gehäuseteil des Generatorteils (z.B. bei einer Radialturbine) ist eine Dichtanordnung vorgesehen, die im Betrieb das rotierende Turbinenrad gegenüber dem feststehenden Teil abdichtet. Prinzip- und bauartbedingt strömt ein Teil des Mediums im Betrieb über die Dichtanordnung als Leckstrom hinweg und dringt beispielsweise in einen Innenraum des Generatorteils ein. Je nach Betriebssituation kann dabei die Dichtwirkung der Dichtanordnung im Betrieb variieren. Der Generatorteil weist weiterhin eine Generatorwelle auf, die zumindest einen Lagerring umfasst. Dieser ist vorzugsweise als separates Bauteil mit der Generatorwelle verbunden. Die Generatorwelle erstreckt sich bis in den Turbinenteil und das Turbinenrad ist auf der Generatorwelle befestigt. Die Generatorwelle ist über ein als Magnetlager ausgebildetes Axiallager sowie typischerweise über mehrere Radiallager gelagert. Das Axiallager kann an unterschiedlichen Positionen entlang der Generatorwelle angeordnet sein. Es ist vorzugsweise im Generatorteil angeordnet und dort insbesondere unmittelbar anschließend an den Turbinenteil. Alternativ ist es zwischen einem ersten Radiallager und einem Rotor oder am Ende des Generatorteils nach dem Rotor angeordnet.

Das Axiallager weist allgemein zwei zueinander beabstandete Spulen auf, nämlich eine dem Generatorteil zugewandte und eine dem Generatorteil abgewandte (turbinenseitige) Spule. In Axialrichtung betrachtet weist das Axiallager daher eine vordere (turbinenseitige) und eine hintere (generatorseitige) Spule auf. Zwischen den Spulen ist der zumindest eine Lagerring mit einem jeweiligen axialen Abstand zu den Spulen angeordnet.

Gemäß einer bevorzugten Variante sind die beiden Spulen genau einem (einzigen) Lagerring zugeordnet und beidseitig unmittelbar, also insbesondere ohne Zwischenschaltung von weiteren Komponenten, zu diesem einen Lagerring mit dem jeweiligen Abstand angeordnet.

Alternativ besteht auch die Möglichkeit, dass zwei voneinander in Axialrichtung beabstandete Lagerringe ausgebildet sind. In Axialrichtung betrachtet sind daher eine vorderer, turbinenseitiger sowie ein hinterer, generatorseitiger Lagerring vorgesehen. Zwischen den beiden Lagerringen ist beispielsweise ein Stator / Rotor des Generators angeordnet. Jede der Spulen ist dabei genau einem Lagerring zugeordnet, wobei die eine Spule in Axialrichtung vor und die andere Spule in Axialrichtung nach dem ihr zugeordneten Lagerring angeordnet ist. Bevorzugt ist die vordere Spule in Axialrichtung vor dem vorderen Lagerring und die hintere Spule in Axialrichtung hinter dem hinteren Lagerring angeordnet. Das Axiallager ist bei dieser alternativen Ausgestaltung daher nach Art eines geteilten Axiallagers ausgebildet, bei dem die beiden Spulen des Axiallagers den beiden voneinander beabstandeten Lagerringen zugeordnet sind.

Nachfolgend wird die Erfindung ohne Beschränkung der Allgemeinheit im Zusammenhang mit dem Axiallager mit dem einen Lagerring und den beidseitig angeordneten Spulen beschrieben. Die Ausführungen gelten gleichermaßen auch für die alternative Variante eines geteilten Axiallagers.

Für den Betrieb des Turbinengenerators allgemein und speziell auch zum Steuern des Axiallagers ist eine Steuereinrichtung angeordnet. Diese ist derart ausgebildet, dass der axiale Abstand zwischen dem zumindest einen Lagerring und zumindest einer der Spulen auf einen Sollwert geregelt wird. Die Regelung des Abstands zwischen dem zumindest einen Lagerring und der anderen Spule ergibt sich typischerweise automatisch durch die konstruktive, mechanische feste Zuordnung zwischen den einzelnen Lagerringen und den Spulen.

Zu diesem Zweck ist die Steuereinrichtung dazu eingerichtet, im Betrieb die Spulen mit einem Spulenstrom zu beaufschlagen. Die Spulen sind für einen maximalen Spulenstrom ausgelegt. Um einen zuverlässigen Betrieb zu gewährleisten ist die Steuereinrichtung weiterhin zur Durchführung zumindest einer und vorzugsweise beider der nachfolgend angeführten Maßnahmen ausgebildet:
Gemäß einer ersten Variante wird in Abhängigkeit des aktuellen Betriebszustands, also bei Bedarf, wenn ein bestimmter Betriebszustand auftritt, der Sollwert variiert, auf den der axiale Abstand zwischen Lagerring und Spulen geregelt wird. Durch die Variation des Sollwerts wird das Ziel erreicht, die Dichtwirkung der Dichtanordnung und damit die am Turbinenrad wirkenden Axialkräfte zu beeinflussen.

Gemäß der zweiten Variante wird bei der Erfassung einer Überschreitung einer Stromschwelle für den Spulenstrom zumindest einer der beiden Spulen ein Steuersignal zum Steuern der Strömung des Mediums oder der Drehzahl des Turbinengenerators abgegeben. Bei dieser Maßnahme werden die Axialkräfte durch Steuereingriffe auf Seiten des Mediums oder durch eine Begrenzung der Drehzahl beeinflusst.

Die beiden Maßnahmen dienen der Verbesserung eines zuverlässigen und sicheren Betriebs des Turbinengenerators. Sie beruhen auf der Erkenntnis, dass die Dichtwirkung der Dichtanordnung im Betrieb variiert, was zu einer Veränderung einer Druckdifferenz zwischen einer Vorderseite des Turbinenrads und einer Rückseite des Turbinenrads führt. Die Rückseite des Turbinenrads ist dabei zum Generatorteil hin orientiert. Die Dichtanordnung ist üblicherweise derart ausgelegt, dass im Betrieb sich auf der Vorderseite und der Rückseite des Turbinenrads ein wirksamer gleicher Druck einstellt, sodass die Generatorwelle im Betrieb axiallastfrei oder zumindest weitgehend axiallastfrei gelagert ist.

Von dem Axiallager und den Spulen ist daher im Idealfall keine nennenswerte Axialkraft auf den Lagerring auszuüben, um diesen in einer gewünschten Position zu halten. Variierende Betriebszustände, wie Drehzahl, Massenstrom, Temperatur und Druck, führen jedoch - speziell bei Lastwechseln, wie beispielsweise beim Anfahren oder Herunterfahren des Turbinengenerators - zu Veränderungen in der Geometrie des Turbinenrads und der Dichtanordnung, sodass deren Dichtwirkung variiert. Durch die Variation der Dichtwirkung erhöht oder erniedrigt sich der Leckstrom und damit auch der Druck auf der Rückseite. Dies hat unmittelbaren Einfluss auf den zwischen der Vorderseite und der Rückseite des Turbinenrads herrschenden wirksamen Differenzdruck. Dadurch wird eine Veränderung der auf das Turbinenrad und damit der auf die Generatorwelle wirkenden Axialkraft hervorgerufen, welche von dem Axiallager abgefangen werden muss.

Durch die Regelung des Axiallagers auf den gewünschten Sollwert, der für normale Betriebszustände üblicherweise fest vorgegeben ist, wird die sich verändernde Axialkraft über das Axiallager abgefangen. Hierzu werden die Spulenströme geeignet eingestellt, sodass die beiden in Axialrichtung versetzten Teile des Axiallagers mit unterschiedlichen Spulenströmen beaufschlagt werden, sodass die Lagerteile unterschiedliche Axialkräfte auf den Lagerring und damit die Generatorwelle ausüben.

Werden jedoch die aufgrund der variierenden Dichtwirkung turbinenseitig auf die Generatorwelle ausgeübten Axialkräfte zu groß, nähert sich der Spulenstrom dem maximalen Spulenstrom an und es wird ein kritischer Betriebszustand erreicht. Über eine weitere Regelung des Axiallagers auf den vorgegebenen Sollwert kann dann unter Umständen eine ordnungsgemäße Lagerung nicht mehr sichergestellt sein und es kann zum Ausfall und Schaden des Lagers kommen.

Durch die beiden beschriebenen Maßnahmen wird ein derartiger kritischer Betriebszustand vermieden oder zumindest sichergestellt, dass der Turbinengenerator in einen sicheren Zustand überführt wird. Für die beiden Maßnahmen werden dabei vorzugsweise unterschiedliche Auslösekriterien herangezogen. Bevorzugt wird zunächst die erste Variante mit der Veränderung des Sollwerts durchgeführt und erst im Falle eines kritischen Zustands wird die zweite Variante umgesetzt. Vorliegend wird insbesondere unterschieden zwischen einem normalen Betriebsmodus, einem optimierten Betriebs-modus und einem Sicherheits-Modus.

Im normalen Betriebsmodus wird das Axiallager auf einen z.B. herstellerseitig vorgegebenen Normal-Sollwert für den Abstand geregelt oder alternativ wird der Turbinengenerator auf einen maximalen Wirkungsgrad geregelt, wobei Änderungen des Abstands in einem vorgegebenen Bereich vorzugsweise zulässig sind.

Im optimierten Betriebsmodus wird die Maßnahme gemäß der ersten Variante durchgeführt und der Sollwert für den Abstand verändert. Hierzu ist vorzugsweise ein erstes Auslösekriterium vorgesehen.

Im Sicherheits-Modus wird die Maßnahme gemäß der zweiten Variante durchgeführt. Der Sicherheits-Modus wird eingeleitet, wenn einer der Spulenströme den vorgegebenen Stromschwellwert überschreitet.

Im Sicherheits-Modus ist zumindest eine der beiden Varianten vorgesehen. Insbesondere wenn beide Varianten vorgesehen sind und ausgeführt werden, sind vorzugsweise unterschiedliche Stromschwellwerte vorgesehen, und zwar ein niedriger, erster Stromschwellwert für die Einleitung der ersten Variante (Veränderung des Sollwertes) und ein höherer, zweiter Stromschwellwert für die Einleitung der zweiten Variante (Veränderung der Strömungsverhältnisse des Mediums). Anstelle von absoluten Stromschwellwerten der Spulenströme werden alternativ mit den Spulenströmen korrelierte Größen, beispielsweise relative oder absolute Differenzwerte zwischen den Spulenströmen oder auch absolute oder relative Abstandsmaße als (Strom) Schwellwerte für die Einleitung der Maßnahmen herangezogen.

Sowohl aus dem optimierten Modus als auch aus dem Sicherheits-Modus wird vorzugsweise wieder in den normalen Betriebsmodus übergegangen, wenn die Betriebsparameter dies zulassen, wenn z.B. der Turbinengenerator nach einem Anfahren in einen quasi stationären Betriebszustand übergeht. Bei der ersten Variante geschieht der Übergang aus dem optimierten Modus in den normalen Betriebsmodus vorzugsweise automatisch, wenn nämlich - z.B. nach Erreichen des stationären Betriebszustands - der Sollwert automatisch wieder in Richtung zum vorgegebenen Sollwert verändert wird.

Die zweitgenannte Variante greift in einem kritischen Betriebszustand in eine Drehzahlregelung des Turbinengenerators oder in eine Steuerung der Strömungsverhältnisse des Mediums ein, sodass sich die Betriebsparameter, wie beispielsweise Massenstrom, Druck, Drehzahl, Temperatur, verändern und insbesondere reduziert werden, um also den Turbinengenerator wieder in einen sicheren Betriebszustand zu überführen.

Die erstgenannte Variante setzt demgegenüber an der Erkenntnis an, dass die Dichtwirkung der Dichtanordnung maßgebend von dem Abstand und dem Spaltmaß zwischen dem Turbinenrad und dem stehenden Gehäuseteil, insbesondere dem feststehenden Teil des Generatorteils, im Bereich der Dichtanordnung abhängt.

Dieses Spaltmaß wird also bevorzugt bewusst variiert, und zwar durch eine Variation des Sollwerts für das Axiallager. Durch diese Maßnahme wird daher quasi aktiv über die von dem Axiallager ausgeübten Axialkräfte der Lagerring und mit ihm die Generatorwelle relativ zum feststehenden Teil des Generatorteils axial verschoben. Dadurch wird unmittelbar das Spaltmaß zwischen Turbinenrad und dem feststehenden Teil und damit die Dichtwirkung beeinflusst.

Die Variation des Sollwerts wird dabei vorzugsweise derart gewählt, dass die Dichtwirkung derart verändert wird, dass eine Angleichung der Druckverhältnisse auf der Vorderseite und der Rückseite des Turbinenrads erzielt wird, um die gewünschte axialkraftfreie oder zumindest weitgehend axialkraftfreie Lagerung der Generatorwelle zu erzielen.

Gemäß einer bevorzugten Weiterbildung wird der Sollwert dabei derart variiert, dass eine Angleichung der von den beiden Spulen erzeugten Axialkräfte bewirkt wird.

Der Sollwert wird weiterhin vorzugsweise in einem maximal zulässigen Arbeitsbereich variiert, der im Bereich von ± 0,5mm liegt. Das heißt, die maximal zulässige Änderung des für den Sollwert maßgebenden Abstandswerts zwischen Lagerring und jeweiliger Spule liegt in diesem Arbeitsbereich.

In bevorzugter Weiterbildung wird der durch die Variation des Sollwerts durchgeführte optimierte Betriebsmodus dann eingeleitet, wenn - als Auslösekriterium - eine Differenz zwischen den Spulenströmen der beiden Spulen des Axiallagers und/oder ein Absolut-Wert dieser Spulenströme oder eine damit verbundene Größe eine vorgegebene Schwelle überschreitet.

Vorzugsweise wird der optimierte Betriebsmodus dann eingeleitet, wenn die Differenz zwischen den Spulenströmen größer 20% oder größer 30% des beispielsweise gemittelten Spulenstroms der beiden Spulen (Mittelwert der Spulenströme der beiden Spulen) ist. Insbesondere wird der optimierte Betriebsmodus eingeleitet, wenn die Differenz zwischen 20% und 60% des gemittelten Spulenstroms liegt.

Alternativ oder ergänzend wird als Auslösekriterium ein Absolutwert der Spulenströme verwendet, beispielsweise wenn der Spulenstrom einer der beiden Spulen größer 20%, größer 30% und vorzugsweise im Bereich zwischen 20% und 50% des maximal zulässigen Spulenstroms liegt.

Beide Auslösekriterien sind ein Indiz für eine erhöhte von dem Axiallager abzufangende Axialkraft.

Zweckdienlicherweise wird der Sicherheits-Modus initiiert und die zweite Variante eingeleitet, wenn zumindest einer der Spulenströme der beiden Spulen größer als 60% und insbesondere größer als 75% des maximal zulässigen Spulenstroms ist, d.h. die Stromschwelle als Auslösekriterium liegt in diesen Bereichen, vorzugsweise im Bereich zwischen 60% und 85% des maximal zulässigen Spulenstroms.

Allgemein liegt die Auslöseschwelle für den Sicherheits-Modus höher als für den optimierten Modus.
Für die zweitgenannte Maßnahme, gemäß der bei Überschreiten der Stromschwelle ein Steuersignal abgegeben wird, wird zweckdienlicherweise eine oder es werden mehrere der nachfolgenden Maßnahmen veranlasst:
- Es wird der Massenstroms des Mediums verringert, speziell durch Ansteuern eines Strömungsventils für das Medium oder indem das Medium über einen Bypass an dem Turbinenteil vorbeigeführt wird,
- es wird die aktuelle Drehzahl beispielsweise auf einen vorgegebenen Wert begrenzt oder sie wird reduziert,
- die Druckverhältnisse am Einlass- und/oder Auslass des Turbinenrads werden verändert. Dies erfolgt wiederum vorzugsweise durch das Ansteuern von Klappen oder Ventilen, oder durch Veränderung von übergeordneten Prozessparametern eines vorgelagerten Betriebsprozesses, welcher Einfluss auf diese Druckverhältnisse nimmt.

Die Dichtanordnung ist weiterhin vorzugsweise als eine Labyrinthdichtung ausgebildet. Bei dieser greifen vorzugsweise Ringstege eines Dichtelements in entsprechende Ringnuten an der Rückseite des Turbinenrads ein.

Zur Steuerung und Regelung des axialen Abstands ist allgemein eine Messeinrichtung vorgesehen, über die dieser axiale Abstand ermittelt wird. Speziell ist zumindest ein Abstandssensor angeordnet, der einen Referenzabstand zwischen einem rotierenden Teil und einem feststehenden Teil misst. Die Messung erfolgt vorzugsweise in axialer Richtung auf eine spezielle Messfläche, die beispielsweise durch einen an der Generatorwelle angebrachten Messring ausgebildet ist. Der Abstandssensor ist mit dem feststehenden Teil des Generatorteils verbunden. Der axiale Abstand zwischen der jeweiligen Spule des Axiallagers und dem Lagerring wird daher vorzugsweise indirekt und mittelbar über die Abstandsmessung dieser Messanordnung erfasst.

Eine Ausführungsvariante der Erfindung wird nachfolgend anhand der Figuren näher erläutert. Diese zeigen teilweise in vereinfachten Darstellungen:
- Fig. 1: eine teilweise Längsschnittdarstellung durch einen Turbinengenerator,
- Fig. 2: eine vergrößerte Schnittdarstellung des in Fig. 1 mit dem Buchstaben C gekennzeichneten Axiallagerbereichs,
- Fig. 3: eine vergrößerte Darstellung des in der Fig. 1 mit dem Buchstaben D gekennzeichneten Bereichs mit einer Labyrinthdichtung sowie
- Fig. 4: eine stark vereinfachte Prinzipdarstellung des Turbinengenerators mit Zu- und Ableitung für das Medium.

In den Figuren sind gleich wirkende Bauteile mit den gleichen Bezugszeichen versehen.

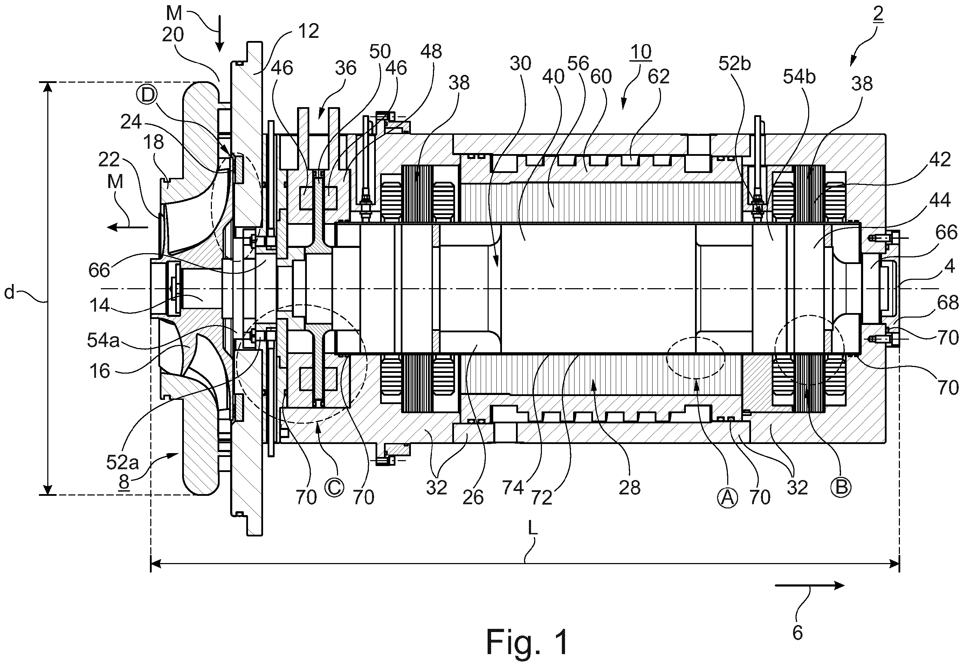

Ein in der Fig. 1 dargestellter Turbinengenerator 2 erstreckt sich entlang einer Rotationsachse 4 in Axialrichtung 6 und weist einen Turbinenteil 8 auf, an den sich ein Generatorteil 10 anschließt. An seinem vorderen Stirnende weist der Generatorteil 10 einen Ringflansch 12 auf, über den er am Turbinenteil 8 befestigt ist.

Der Turbinenteil 8 sowie der Generatorteil 10 weisen eine gemeinsame durchgehende Generatorwelle 14 auf. Auf dieser ist im Turbinenteil 8 ein Turbinenrad 16 befestigt, welches um den Umfang verteilt Schaufeln aufweist und zu einem Turbinengehäuse 18 Strömungskanäle einschließt. Im Betrieb wird ein Medium M über Einlass 20 zugeführt, durchströmt den Turbinenteil 8 und verlässt diesen über einen Auslass 22. Bei dem in der Figur dargestellten Turbinenteil 8 handelt es sich um eine Radialturbine, bei der der Einlass 20 radial und der Auslass 22 axial orientiert sind. Alternativ ist der Turbinenteil 8 als Axialturbine ausgebildet, bei der der Einlass 20 und der Auslass 22 axial orientiert sind.

Das Turbinenrad 16 ist zum Generatorteil 10 und zwar zu dem feststehenden Ringflansch 12 über eine Dichtanordnung abgedichtet, welche im Ausführungsbeispiel als eine Labyrinthdichtung 24 ausgebildet ist. Infolge von Leckströmen dringt im Betrieb ein Teil des Mediums M in einen Innenraum 26 des Generatorteils 10 ein. In diesem Innenraum 26 stellt sich ein Druck ein, welcher im Bereich zwischen dem Druck am Einlass 20 und dem Druck am Auslass 22 des Mediums M liegt.

Der Generatorteil 10 weist allgemein einen feststehenden Teil 28 und einen rotierenden Teil 30 auf. Der feststehende Teil 28 umfasst unter anderem ein Generatorgehäuse 32 mit dem bereits beschriebenen Ringflansch 12.

Der rotierende Teil 30 ist über eine Lageranordnung gelagert, die im Ausführungsbeispiel ein Axiallager 36 sowie zwei Radiallager 38 aufweist. Das Axiallager 36 ist zwischen dem Ringflansch 12 und dem vorderen, turbinenseitigen Radiallager 38, angeordnet. Das rückwärtige Radiallager 38 stützt die Generatorwelle 14 in deren Endbereich ab. Zwischen den beiden Radiallagern 38 ist ein Rotor 40 angeordnet.

Im Ausführungsbeispiel sind das Axiallager 36 sowie die beiden Radiallager 38 jeweils als Magnetlager ausgebildet. Durch die Ausgestaltung als Magnetlager weisen die Radiallager 38 einen feststehenden Außenteil 42 sowie einen auf der Generatorwelle 14 befestigten und im Betrieb rotierenden Innenteil 44 auf.

Das Axiallager 36 weist zwei axial zueinander beabstandete Spulen 46 auf, die jeweils in einem Spulengehäuse 48 eingehaust sind. Auf der Generatorwelle 14 ist ein Lagerring 50 befestigt, welcher in den Zwischenraum zwischen die beiden Spulen 46 eindringt. Zwischen dem einen Lagerring 50 und den beiden Spulen ist jeweils ein dünner Luftspalt ausgebildet.

Gemäß einer alternativen, hier nicht näher dargestellten Variante ist das Axiallager als ein geteiltes Axiallager ausgebildet, bei dem einer jeder der beiden Spulen 46 ein eigener Lagerring zugeordnet ist, die voneinander beabstandet sind. Ausgehend von der in der Fig. 1 dargestellten Situation ist der zweite Lagerring beispielsweise nachfolgend zum Rotor 40 und beispielsweise im Bereich des in Axialrichtung 6 betrachtet hinteren Radiallagers 38 angeordnet.

Zur Überprüfung sowohl der axialen Position als auch der radialen Position des rotierenden Teils 30 gegenüber dem feststehenden Teil 28 sind mehrere Lagesensoren ausgebildet, nämlich zumindest ein axialer Lagesensor 52a, sowie im Ausführungsbeispiel zumindest zwei radiale Lagesensoren 52b. Diese Lagesensoren 52a, b messen jeweils auf einem rotierenden Messring 54a, b des rotierenden Teils 30. Vorzugsweise sind umfangsseitig zwei versetzt zueinander angeordnete axiale Lagesensoren 52a angeordnet.

Der Rotor 40 ist von einem Stator 56 umgeben. Dieser weist - in hier nicht näher dargestellter Weise - Spulenwicklungen auf, die um als Blechpakete ausgebildete Spulenkerne gewickelt sind., Umfangsseitig ist der Stator 56 von einem Kühlmantel 60 umgeben, welcher wiederum an seiner äußeren Umfangsseite Kühlkanäle 62 aufweist, die im Betrieb von Kühlmittel durchströmt werden. Die Kühlkanäle 62 sind nach außen von einer Gehäusehülse des Generatorgehäuses 32 abgeschlossen. Die Gehäusehülse weist einen Kühlmitteleinlass sowie einen Kühlmittelauslass auf.

Die Lageranordnung weist weiterhin zwei axial voneinander beabstandete Notlager 66 auf, die den rotierenden Teil 30 jeweils zum Generatorgehäuse 32 radial lagern, und zwar vorzugsweise an den gegenüberliegenden Enden des Generatorteils 10, wie dies in der Fig. 1 dargestellt ist. Sie dienen der Notlagerung beispielsweise bei einem Stromausfall. Das in der Fig. 1 dargestellte rechte Notlager 66 ist in einer Stirnwand des Generatorgehäuses 32 gelagert. Diese Stirnwand weist entsprechend eine Lagerbohrung auf, welche nach außen mittels eines Deckels 68 verschlossen ist. Dieser ist zur Stirnseite des Generatorgehäuses 32 abgedichtet, und zwar insbesondere mittels mindestens eines O-Rings 70.

Zwischen dem rotierenden Teil 30 und dem feststehenden Teil 28 ist ein Spalt 72 ausgebildet. In diesem ist ein Dichtrohr 74 angeordnet. Dieses erstreckt sich vorzugsweise über den Rotor 40 hinweg zwischen den beiden Radiallagern 38. Vorzugsweise erstreckt sich das Dichtrohr 74 über nahezu die gesamt axiale Länge des rotierenden Teils 30. Insbesondere erstreckt sich das Dichtrohr 74 ausgehend von dem Axiallager 36 bis zur Stirnseite des Generatorgehäuses 32. Das Dichtrohr 74 ist im Betrieb feststehend, zählt daher zu dem feststehenden Teil 28. Es ist an seinen gegenüberliegenden Enden jeweils über Dichtungen, die insbesondere als O-Ringe 70 ausgebildet sind, in radialer Richtung abgedichtet. Am vorderen Ende erfolgt die Abdichtung zum Spulengehäuse 48. Am rechten Ende taucht das Dichtrohr 74 in eine Aussparung in der Stirnwandung des Generatorgehäuses 32 ein und ist dort radial zu einem umlaufenden Wandungsbereich der Aussparung abgedichtet. Über das Dichtrohr 74 erfolgt eine hermetische Abdichtung des feststehenden Teils 28 gegenüber dem Innenraum 26. Weiterhin sind die auf der Generatorwelle 14 angeordneten Bauteile ebenfalls zum Innenraum hin abgedichtet.

Im Betrieb durchströmt das Medium M den Turbinenteil 8 und treibt dieses sowie die Generatorwelle 14 und damit auch den Rotor 40 zur Gewinnung von elektrischer Energie an. Das Turbinenrad 16 rotiert mit einer Drehzahl im Bereich zwischen 4 000 bis 40 000 U/min. Das Turbinenrad weist einen Durchmesser d auf, der je nach Leistungsgröße zwischen 50mm und 500mm liegt. Der gesamte Turbinengenerator 2 weist eine Länge I auf, die je nach Leistungsgröße zwischen 350mm und 1500mm liegt.

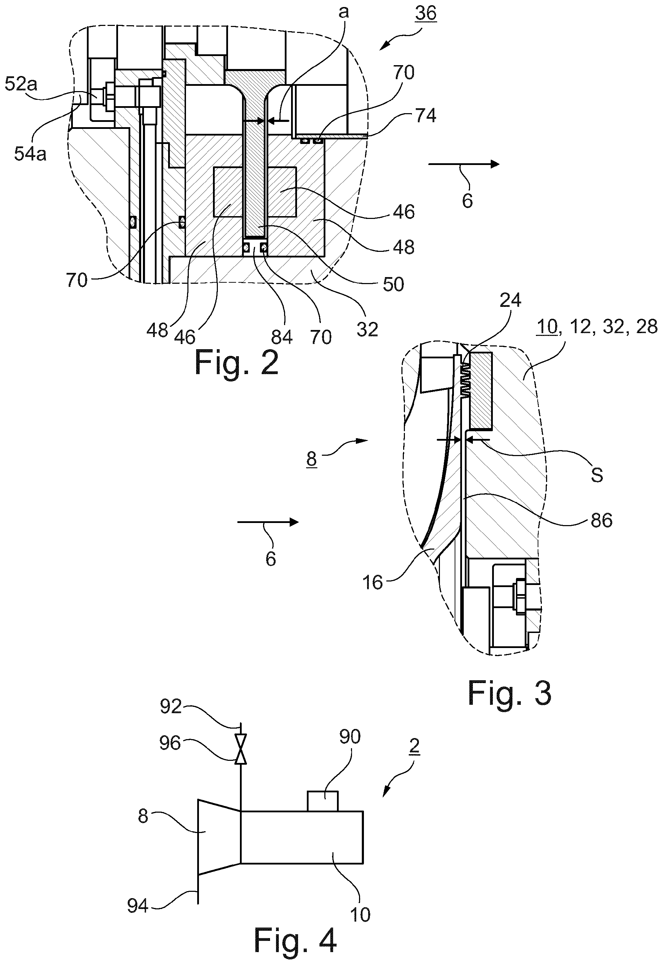

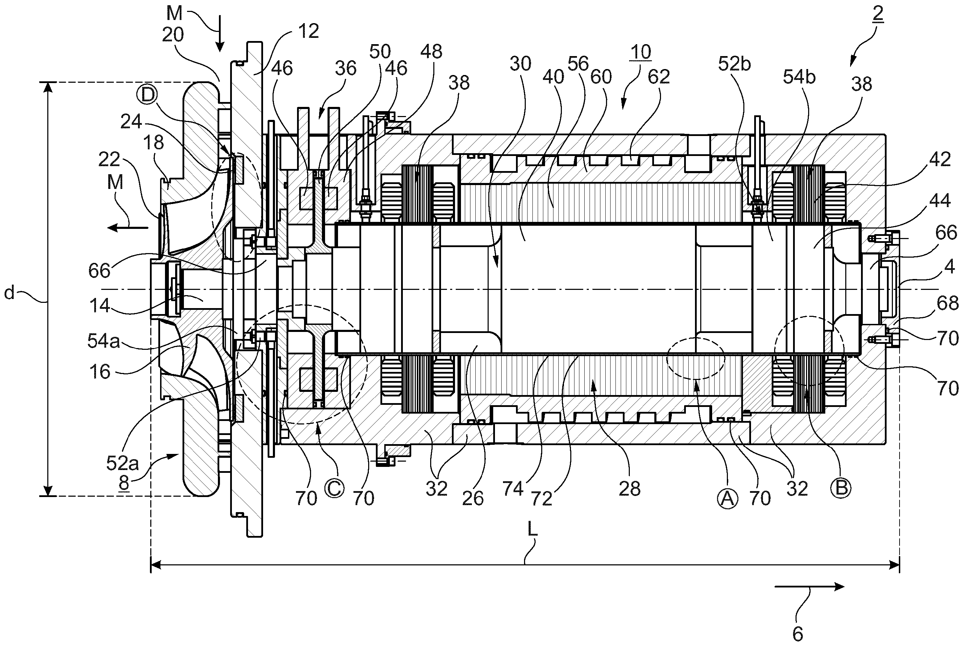

Der Aufbau des Axiallagers 36 ist anhand der Fig. 2 zu erkennen. Die beiden Spulen 46 sind jeweils in einem im Querschnitt betrachtet etwa U-förmigen Spulengehäuse 48 angeordnet. In den Zwischenraum zwischen die beiden Spulen 46 dringt der Lagerring 50. Zwischen dem Lagerring 50 und einer jeweiligen Spule 46 ist ein Abstand a ausgebildet. Die Spulengehäuse 48 dichten auch den zwischen ihnen bestehenden Zwischenraum in radialer Richtung hin ab. Im Ausführungsbeispiel ist hierzu ein Zwischenstück 84 angeordnet, welches als ein Ring ausgebildet, der sich umfangsseitig an den Lagerring 50 anschließt. Das Zwischenstück 84 ist dabei zwischen den beiden Spulengehäusen 48 angeordnet und mit Dichtungselementen, speziell O-Ringen 70, abgedichtet. Das linke Spulengehäuse 48 ist weiterhin über einen O-Ring 70 zu einem weiteren Gehäuseteil des Generatorgehäuses 32 abgedichtet.

Der axiale Lagesensor 52a erfasst einen axialen Abstandswert zu dem axialen Messring 54a. Dieser Abstandswert ist unmittelbar korreliert zu dem Abstand a zwischen den beiden Spulen 46 und dem Lagerring 50. Aufgrund der geometrischen Verhältnisse lässt sich der gemessene Abstandswert eindeutig umrechnen in den Abstand a, den einerseits die turbinenseitige Spule 46 zum Lagerring 50 und den andererseits die generatorseitige Spule zum Lagerring 50 einnimmt. Die beiden Abstände können sich auch unterscheiden. Im normalen Betriebszustand wird der Abstand typischerweise so eingestellt, dass der Abstand a zu den beiden Spulen 46 identisch ist.

Anhand der vergrößerten Darstellung gemäß der Fig. 3 ist die als Labyrinthdichtung 24 ausgeführte Dichtanordnung zwischen dem Turbinenteil 8 und dem Generatorteil 10 gut zu erkennen. Zwischen dem Turbinenrad 16 und dem Ringflansch 12 ist ein Dichtelement angeordnet, welches in Axialrichtung abstehende Ringstege aufweist. Diese Ringstege greifen dabei in korrespondierende Ringnuten auf der Rückseite des Turbinenrads 16 und bilden die bereits erwähnte Labyrinthdichtung 24 aus. Die Ringstege und die Ringnuten sind dabei lediglich im äußersten Umfangsbereich des Turbinenrads 16 angeordnet. Zwischen dem Turbinenrad 16 und dem Generatorgehäuse 32, also speziell dem Ringflansch 12, ist ein weiterer Spalt 86 mit einem Spaltmaß s ausgebildet. Über die Labyrinthdichtung 24 strömt im Betrieb ein Leckstrom des Mediums M und gelangt über den weiteren Spalt 86 in den Innenraum 26. Die Dichtwirkung der Labyrinthdichtung 24 wird durch einen hier nicht näher dargestellten Spalt zwischen den Ringstegen und den Ringnuten definiert. Dieser variiert mit einer Veränderung des Spaltmaßes s des Spalts 86, ist also mit dem Spaltmaß s korreliert.

Anhand der stark vereinfachten Prinzipdarstellung der Fig. 4 ist zu erkennen, dass dem Turbinengenerator 2 eine Steuereinrichtung 90 zugeordnet ist, die vorzugsweise unmittelbarer Bestandteil des Turbinengenerators 2 ist. An dem Turbinenteil 8 ist einlassseitig eine Zuleitung 92 und auslassseitig eine Ableitung 94 für das Medium M angeschlossen. Beispielhaft ist in der Fig. 4 ein Strömungsventil 96 in der Zuleitung 92 angeordnet. Grundsätzlich kann ein solches ergänzend oder alternativ in der Ableitung 94 angeordnet sein.

Im Betrieb bildet sich auf der generatorseitigen Rückseite des Turbinenrads 16 ein Druck aus und es stellt sich ein Differenzdruckverhältnis zwischen der turbinenseitigen Vorderseite und dieser Rückseite des Turbinenrads 16 ein. Unterschiedliche Drücke führen zu einer auf das Turbinenrad 16 und die Generatorwelle 14 einwirkenden Axialkraft. Die Dichtanordnung 24 ist vorzugsweise derart ausgebildet, dass die Druckverhältnisse in einem Normalbetrieb auf der Vorderseite und Rückseite gleich oder möglichst gleich sind, so dass sich kein oder möglichst kein Differenzdruck ausbildet. Dadurch wird keine oder möglichst keine Axialkraft erzeugt und das Axiallager 36 muss keine oder nur geringe Axialkräfte abfangen.

Im Betrieb kann es durch variierende Prozessparameter, wie beispielsweise variierende Drehzahlen, variierende Druckverhältnisse, variierende Strömungsraten, variierende Temperaturen etc. dazu kommen, dass das Spaltmaß s zwischen dem Turbinenrad 16 und dem Ringflansch 12 variiert. Variierende Prozessparameter, also instationäre Betriebszustände treten beispielsweise beim Hochfahren auf. Diese können zu einer geringfügigen Verbiegung des Turbinenrads 16 führen, was unmittelbaren Einfluss auf das Spaltmaß s und die Dichtwirkung der Labyrinthdichtung 24 hat. Dadurch verändert sich der über den weiteren Spalt 86 strömende Leckstrom, was zu einer Veränderung der Druckverhältnisse und speziell der Druckdifferenz zwischen der Vorderseite und der Rückseite des Turbinenrads 16 und schließlich zu einer auf die Generatorwelle 14 resultierenden Axialkraft führt. Um weiterhin einen zuverlässigen Betrieb des Turbinengenerators 2 bei den sehr hohen Drehzahlen zu gewährleisten, muss eine derartige Axialkraft über das Axiallager 36 abgefangen werden. Hierzu ist zunächst eine Regelung in der Steuereinrichtung 90 integriert, welche die Spulenströme der beiden Spulen 46 entsprechend ansteuert, um den Abstand a zwischen den jeweiligen Spulen 46 und dem Lagerring 50 auf einen gewünschten vorgegebenen Sollwert einzustellen. Dieser ist vorzugsweise derart gewählt, dass der Lagerring 50 exakt mittig zwischen den Spulen 46 angeordnet ist.

Um einen sicheren Betrieb auch bei einer Veränderung des Spaltmaßes s und einer damit einhergehenden Veränderung der Dichtwirkung der Labyrinthdichtung und damit der Axialkräfte zu gewährleisten, ist die Umschaltung in den optimierten Betriebsmodus und ggf. auch in den Sicherheits-Modus vorgesehen. Die Steuereinrichtung 90 schaltet dabei zunächst von einem normalen Betriebsmodus in den optimierten Betriebsmodus um, wenn z.B. eine Differenz der Spulenströme der Spulen 46 des Axiallagers 36 größer als 20% oder größer als 30% eines Mittelwerts der Spulenströme der beiden Spulen 46 ist. Reicht diese Maßnahme nicht aus, wird vorzugsweise der Sicherheits-Modus eingeleitet, wenn eine spezielle sicherheitskritische Betriebssituation erreicht ist. Speziell schaltet die Steuervorrichtung in den Sicherheits-Modus und gibt das Steuersignal S ab, wenn einer der beiden Spulenströme der beiden Spulen 46 eine vorgegebene Schwelle, auch als Stromschwelle bezeichnet, von beispielsweise 75% eines maximal zulässigen Spulenstroms übersteigt.

Im optimierten Modus wird der Sollwert für den Abstand a verändert. Infolge des Regelalgorithmusses führt dies dazu, dass durch eine Veränderung der Spulenströme bewusst eine Axialkraft erzeugt wird, so dass der Lagerring 50 und damit die gesamte Generatorwelle 14 in - oder entgegen der Axialrichtung 6 relativ zum feststehenden Teil 28 verschoben wird. Dies führt unmittelbar zu einer axialen Relativverschiebung zwischen dem Turbinenrad 16 und dem Ringflansch 12 und damit zu einer Veränderung des Spaltmaßes s. Hierdurch wird unmittelbar Einfluss auf die Dichtwirkung der Labyrinthdichtung 24 und damit auf die Druckverhältnisse genommen. Die Veränderung des Sollwerts für den Abstand a ist dabei derart, dass - in Abhängigkeit der aktuellen Betriebssituation - das Spaltmaß s vergrößert oder verkleinert wird, und zwar derart, dass sich die Spulenströme der beiden Spulen 46 angleichen. Wenn also beispielsweise durch die Betriebssituation sich das Spaltmaß s zunächst vergrößert hat, sodass der Druck auf der Rückseite sich vergrößert und eine Axialkraft entgegen der Axialrichtung 6 ausgeübt wird, so wird der neue Sollwert a derart eingestellt, dass das Spaltmaß s wieder verringert wird. Das heißt, der Lagerring 50 wird durch das Axiallager bewusst in der Axialrichtung 6 zum Turbinenteil 8 versetzt.

Bei einer im Regelbetrieb auftretenden Verringerung des Spaltmaßes s wird entsprechend umgekehrt vorgegangen.

Durch diese Maßnahme wird daher über die Variation des Sollwerts für den Abstand a unmittelbar die Dichtwirkung der Labyrinthdichtung 24 beeinflusst, und zwar bevorzugt in Richtung einer möglichst axialkraftfreien Lagerung oder es wird auf einen maximalen Wirkungsgrad des Turbinengenerators 2 geregelt.

Alternativ zu dem optimierten Modus ist lediglich der Sicherheits-Modus vorgesehen. Vorzugsweise ist der Sicherheitsmodus jedoch ergänzend vorgesehen. Bei diesem wird von der Steuervorrichtung 90 ein Steuersignal S abgegeben, mit dem beispielsweise das Strömungsventil 96 angesteuert wird, um beispielsweise den Massenfluss für das Medium M zu verringern. Alternativ oder ergänzend wird die Drehzahl des Turbinengenerators 2 durch die Steuerung begrenzt. Durch den Eingriff in die Strömung des Mediums M oder in die Drehzahl wird eine Änderung der kritischen Druckverhältnisse am Turbinenrad 16 erreicht und damit werden auch die durch einen Differenzdruck hervorgerufenen Axialkräfte reduziert.

Wie erwähnt werden beide Varianten insbesondere in Kombination eingesetzt, wobei zunächst - bei Erreichen des ersten Auslösekriteriums - der Sollwert variiert wird. Da dieser lediglich innerhalb eines begrenzten Bereichs variiert werden kann, da ein Abstand zwischen den Spulen und dem Lagerring 50 verbleiben muss, kann bei ungünstigen Situationen die zusätzliche Maßnahme gemäß der zweiten Variante erforderlich werden. Diese wird daher insbesondere dann zusätzlich eingeleitet, wenn der Sollwert bereits einen maximal zulässigen Wert erreicht hat und zusätzlich das zweite Auslösekriterium, nämlich die Überschreitung der Stromschwelle für den Spulenstrom überschritten wird.

**Bezugszeichenliste**

| | | | |
|---|---|---|---|
| 2 | Turbinengenerator | 52b | radialer Lagesensor |
| 4 | Rotationsachse | 54a | axialer Messring |
| 6 | Axialrichtung | 54b | radialer Messring |
| 8 | Turbinenteil | 56 | Stator |
| 10 | Generatorteil | 60 | Kühlmantel |
| 12 | Ringflansch | 62 | Kühlkanäle |
| 14 | Generatorwelle | 66 | Notlager |
| 16 | Turbinenrad | 68 | Deckel |
| 18 | Turbinengehäuse | 70 | O-Ring |
| 20 | Einlass | 72 | Spalt |
| 22 | Auslass | 74 | Dichtrohr |
| 24 | Labyrinthdichtung | 76 | Schutzgehäuse |
| 26 | Innenraum | 86 | weiterer Spalt |
| 28 | feststehender Teil | 90 | Steuervorrichtung |
| 30 | rotierender Teil | 92 | Zuleitung |
| 32 | Generatorgehäuse | 94 | Ableitung |
| 36 | Axiallager | 96 | Strömungsventil |
| 38 | Radiallager | | |
| 40 | Rotor | l | Länge |
| 42 | Außenteil | d | Durchmesser |
| 44 | Innenteil | a | Abstand |
| 46 | Spulen | M | Medium |
| 48 | Spulengehäuse | s | Spaltmaß |
| 50 | Lagerring | S | Steuersignal |
| 52a | axialer Lagesensor | | |

## Patentansprüche

1. Turbinengenerator (2), ausgelegt für Drehzahlen größer 4.000 U/min, der einen Turbinenteil (8) sowie einen Generatorteil (10) aufweist und sich entlang einer Rotationsachse vom Turbinenteil (8) zum Generatorteil (10) erstreckt, wobei
- der Generatorteil (10) einen rotierenden Teil (30) sowie einen feststehenden Teil (28) aufweist
- der Turbinenteil (8) ein Turbinenrad (16) sowie einen Einlass (20) und einen Auslass (22) für ein Medium (M) aufweist,
- zwischen dem Turbinenrad (16) und einem stehenden Gehäuseteil eine Dichtanordnung (24) angeordnet ist,
- der Generatorteil (10) eine Generatorwelle (14) mit zumindest einem Lagerring (50) aufweist,
**dadurch gekennzeichnet,**
**dass**
- die Generatorwelle (14) über ein als Magnetlager ausgebildetes Axiallager (36) gelagert ist und hierzu das Magnetlager zwei axial zueinander beabstandete Spulen (46) aufweist, zwischen denen der zumindest eine Lagerring (50) mit einem jeweiligen axialen Abstand (a) zu den Spulen (46) angeordnet ist,
- eine Steuereinrichtung (90) zum Steuern des Axiallagers (36) vorgesehen ist, die derart ausgebildet ist, dass der axiale Abstand (a) zwischen dem zumindest einen Lagerring (50) und einer der Spulen (46) auf einen Sollwert geregelt wird und hierzu die Steuereinrichtung (90) dazu eingerichtet ist, im Betrieb die Spulen (46) mit einem Spulenstrom zu beaufschlagen, wobei die Spulen (46) für einen maximalen Spulenstrom ausgelegt sind,
- wobei die Steuereinrichtung (90) weiterhin derart ausgebildet ist, dass sie bedarfsabhängig zumindest eine der beiden nachfolgenden Maßnahmen veranlasst, nämlich
- den Sollwert variiert, derart, dass die Dichtwirkung der Dichtanordnung (24) verändert wird und/oder
- bei Überschreiten einer Stromschwelle für den Spulenstrom ein Steuersignal (S) zum Steuern der Strömung des Mediums (M) oder der Drehzahl des Turbinengenerators (2) abgibt.

2. Turbinengenerator (2) nach Anspruch 1, wobei durch die Veränderung des Sollwerts ein Spaltmaß (s) zwischen dem Turbinenteil (8) und dem stehenden Gehäuseteil im Bereich der Dichtanordnung (24) verändert wird.

3. Turbinengenerator (2) nach einem der vorhergehenden Ansprüche, wobei im Betrieb über die beiden Spulen (46) jeweils Axialkräfte erzeugt werden, die auf den zumindest einen Lagerring (50) einwirken und die Steuereinrichtung (90) derart ausgebildet ist, dass der Sollwert derart geregelt wird, dass eine Angleichung der von den beiden Spulen (46) erzeugten Axialkräfte bewirkt wird.

4. Turbinengenerator (2) nach einem der vorhergehenden Ansprüche, wobei für die Änderung des Sollwerts eine maximal zulässige Änderung im Bereich von +/- 0,5 mm vorgegeben ist.

5. Turbinengenerator (2) nach einem der vorhergehenden Ansprüche, wobei die Steuereinrichtung (90) derart ausgelegt ist, dass eine Variation des Sollwerts dann vorgenommen wird, wenn eine Differenz zwischen den Spulenströmen und/oder ein Absolutwert von zumindest einem der Spulenströme eine vorgegebene Schwelle überschreitet.

6. Turbinengenerator (2) nach dem vorhergehenden Anspruch, wobei die Steuereinrichtung (90) derart eingerichtet ist, dass die Variation des Sollwerts dann vorgenommen wird, wenn die Differenz zwischen den Spulenströmen größer 20%, vorzugsweise größer 30% und insbesondere im Bereich zwischen 20% und 60% eines gemittelten Spulenstroms der beiden Spulen ist.

7. Turbinengenerator (2) nach einem der vorhergehenden Ansprüche, wobei die Stromschwelle für die Abgabe des Steuersignals (S) im Bereich zwischen 60% und 85% und insbesondere bei 75% des maximal zulässigen Spulenstroms ist

8. Turbinengenerator (2) nach einem der vorhergehenden Ansprüche, wobei die Steuereinrichtung (90) derart eingerichtet ist, dass bei Überschreiten des Stromschwellwertes über das Steuersignal (S) zumindest eine der folgenden Maßnahmen veranlasst wird:
- Verringern der Durchflussrate des Mediums (M) durch Ansteuern eines Strömungsventils für das Medium,
- Begrenzen und/ oder Reduzieren der aktuellen Drehzahl
- Verändern der Druckverhältnisse am Einlass und/oder Auslass

9. Turbinengenerator (2) nach einem der vorhergehenden Ansprüche, wobei als Dichtanordnung eine Labyrinthdichtung (24) ausgebildet ist.

10. Turbinengenerator (2) nach einem der vorhergehenden Ansprüche, **dadurch gekennzeichnet, dass** er für eine Betriebsdrehzahl im Bereich zwischen 4 000 und 40 000 U/min ausgelegt ist und insbesondere der Turbinenteil einen Durchmesser (d) im Bereich zwischen 50mm und 500 mm aufweist.

11. Verfahren zum Betrieb eines Turbinengenerators (2), der einen Turbinenteil (8) sowie einen Generatorteil (10) aufweist und sich entlang einer Rotationsachse vom Turbinenteil (8) zum Generatorteil (10) erstreckt, wobei
- der Generatorteil (10) einen rotierenden Teil (30) sowie einen feststehenden Teil (28) aufweist, und der rotierende Teil (30) mit einer Drehzahl von größer 4.000 U/min rotiert,
- der Turbinenteil (8) ein Turbinenrad (16) sowie einen Einlass (20) und einen Auslass (22) für ein Medium (M) aufweist, und über den Einlass (20) ein Medium (M) einströmt und über den Auslass (22) ausströmt,
- zwischen dem Turbinenteil (8) und einem stehenden Gehäuseteil eine Dichtanordnung (24) angeordnet ist,
- das Generatorteil (10) eine Generatorwelle (14) mit zumindest einem Lagerring (50) aufweist und die Generatorwelle (14)über ein als Magnetlager ausgebildetes Axiallager (36) gelagert ist und hierzu das Axiallager (36) zwei axial zueinander beabstandete Spulen (46) aufweist, zwischen denen der zumindest eine Lagerring (50) mit einem jeweiligen axialen Abstand (a) zu den Spulen (46) angeordnet ist,
- wobei der axiale Abstand (a) zwischen dem zumindest einen Lagerring (50) und einer der Spulen auf einen Sollwert geregelt wird und hierzu die Spulen (46) mit einem Spulenstrom beaufschlagt werden, wobei die Spulen (46) für einen maximalen Spulenstrom ausgelegt sind und wobei weiterhin zumindest eine der folgenden Maßnahmen durchgeführt wird:
- der Sollwert wird variiert, um die Dichtwirkung der Dichtanordnung (24) zu verändern und/oder
- bei Überschreiten einer Stromschwelle für den Spulenstrom wird ein Steuersignal (S) zum Steuern der Strömung des Mediums (M) oder der Drehzahl des Turbinengenerators (2) abgegeben.

## Claims

1. Turbine generator (2), designed for speeds greater than 4,000 rpm, which has a turbine part (8) and a generator part (10) and extends along an axis of rotation from the turbine part (8) to the generator part (10), wherein
- the generator part (10) has a rotating part (30) and a fixed part (28)
- the turbine part (8) has a turbine wheel (16) and an inlet (20) and an outlet (22) for a medium (M),
- a sealing arrangement (24) is arranged between the turbine wheel (16) and a fixed stationary housing part,
- the generator part (10) has a generator shaft (14) with at least one bearing ring (50),
**characterized in**
**that**
- the generator shaft (14) is mounted via an axial bearing (36) configured as a magnetic bearing, and for this purpose the magnetic bearing has two coils (46), which are axially spaced apart from one another and between which the at least one bearing ring (50) is arranged at a respective axial distance (a) from the coils (46),
- a control device (90) for controlling the axial bearing (36) is provided, which is configured in such a way that the axial distance (a) between the at least one bearing ring (50) and one of the coils (46) is regulated to a setpoint, and for this purpose the control device (90) is set up to apply a coil current to the coils (46) during operation, the coils (46) being designed for a maximum coil current,
- wherein the control device (90) is further configured in such a way that it initiates at least one of the following two measures as required, namely
- varies the setpoint in such a way that the sealing effect of the sealing arrangement (24) is changed and/or
- upon exceeding a current threshold for the coil current, outputs a control signal (S) for controlling the flow of the medium (M) or the speed of the turbine generator (2).

2. Turbine generator (2) according to claim 1, wherein a gap dimension (s) between the turbine part (8) and the fixed stationary housing part in the region of the sealing arrangement (24) is changed by the change in the setpoint.

3. Turbine generator (2) according to one of the preceding claims, wherein, during operation, axial forces are respectively generated via the two coils (46), said axial forces acting on the at least one bearing ring (50), and the control device (90) is configured in such a way that the setpoint is regulated in such a way that the axial forces generated by the two coils (46) are brought into alignment.

4. Turbine generator (2) according to one of the preceding claims, wherein a maximum permissible change in the range of +/- 0.5 mm is specified for the change of the setpoint.

5. Turbine generator (2) according to one of the preceding claims, wherein the control device (90) is designed such that a variation of the setpoint is effected when a difference between the coil currents and/or an absolute value of at least one of the coil currents exceeds a predetermined threshold.

6. Turbine generator (2) according to the preceding claim, wherein the control device (90) is set up in such a way that the variation of the setpoint is effected when the difference between the coil currents is greater than 20%, preferably greater than 30% and in particular in the range between 20% and 60% of an averaged coil current of the two coils.

7. Turbine generator (2) according to one of the preceding claims, wherein the current threshold for the output of the control signal (S) is in the range between 60% and 85% and in particular at 75% of the maximum permissible coil current

8. Turbine generator (2) according to one of the preceding claims, wherein the control device (90) is set up in such a way that, upon exceeding the current threshold value, at least one of the following measures is initiated via the control signal (S):
- reducing the flow rate of the medium (M) by controlling a flow valve for the medium,
- limiting and/or reducing the current speed
- varying the pressure conditions at the inlet and/or outlet.

9. Turbine generator (2) according to one of the preceding claims, wherein a labyrinth seal (24) is formed as the sealing arrangement.

10. Turbine generator (2) according to one of the preceding claims, **characterized in that** it is designed for an operating speed in the range between 4,000 and 40,000 rpm and in particular the turbine part has a diameter (d) in the range between 50 mm and 500 mm.

11. Method of operating a turbine generator (2) having a turbine portion (8) and a generator portion (10) and extending along an axis of rotation from the turbine portion (8) to the generator portion (10), wherein
- the generator part (10) has a rotating part (30) and a fixed part (28), and the rotating part (30) rotates at a speed greater than 4,000 rpm,
- the turbine part (8) has a turbine wheel (16) and an inlet (20) and an outlet (22) for a medium (M), and a medium (M) flows in via the inlet (20) and flows out via the outlet (22),
- a sealing arrangement (24) is arranged between the turbine part (8) and a fixed stationary housing part,
- the generator part (10) has a generator shaft (14) with at least one bearing ring (50), and the generator shaft (14) is mounted via an axial bearing (36) configured as a magnetic bearing, and for this purpose the axial bearing (36) has two coils (46), which are spaced apart axially from one another and - between which the at least one bearing ring (50) is arranged at a respective axial distance (a) from the coils (46),
- wherein the axial distance (a) between the at least one bearing ring (50) and one of the coils is controlled to a setpoint and wherein for this purpose a coil current is applied to the coils (46), wherein the coils (46) are designed for a maximum coil current and wherein furthermore at least one of the following measures is carried out:
- the setpoint is varied to change the sealing effect of the sealing arrangement (24) and/or
- when a current threshold for the coil current is exceeded, a control signal (S) is output to control the flow of the medium (M) or the speed of the turbine generator (2).

## Revendications

1. Générateur à turbine (2), conçu pour des vitesses supérieures à 4 000 tr/min, qui comporte une partie de turbine (8) et une partie de générateur (10) et s'étend le long d'un axe de rotation de la partie de turbine (8) à la partie de générateur (10), dans lequel
- la partie de générateur (10) comporte une partie rotative (30) et une partie fixe (28),
- la partie de turbine (8) comporte une roue de turbine (16) et une entrée (20) et une sortie (22) pour un milieu (M),
- un dispositif d'étanchéité (24) est disposé entre la roue de turbine (16) et une partie fixe du boîtier,
- la partie de générateur (10) comporte un arbre de générateur (14) avec au moins une bague de roulement (50),
**caractérisé en ce**
**que**
- l'arbre de générateur (14) est monté par l'intermédiaire d'un palier axial (36) conçu comme un palier magnétique et, à cet effet, le palier magnétique comporte deux bobines (46) espacées axialement l'une de l'autre, entre lesquelles l'au moins une bague de palier (50) est disposée à une distance axiale (a) respective des bobines (46),
- il est prévu un dispositif de commande (90) pour commander le palier axial (36), qui est configuré de telle sorte que la distance axiale (a) entre l'au moins une bague de palier (50) et l'une des bobines (46) est régulée à une valeur de consigne, et à cet effet, le dispositif de commande (90) est conçu pour appliquer un courant de bobine aux bobines (46) pendant le fonctionnement, les bobines (46) étant conçues pour un courant de bobine maximal,
- dans lequel le dispositif de commande (90) est en outre configuré pour initier au moins une des deux actions suivantes selon les besoins, à savoir
- il fait varier la valeur de consigne de telle sorte que l'effet d'étanchéité du dispositif d'étanchéité (24) est modifié et/ou
- il émet un signal de commande (S) pour commander le débit du fluide (M) ou la vitesse du générateur à turbine (2) lorsqu'un seuil de courant pour le courant de la bobine est dépassé.

2. Générateur de turbine (2) selon la revendication 1, dans lequel par la modification de la valeur de consigne une dimension de fente (s) entre la partie de turbine (8) et la partie de boîtier fixe dans la zone du dispositif d'étanchéité (24) est modifiée.

3. Générateur de turbine (2) selon l'une des revendications précédentes, dans lequel, pendant le fonctionnement, les deux bobines (46) génèrent respectivement des forces axiales, qui agissent sur l'au moins une bague de roulement (50), et le dispositif de commande (90) est configuré de telle sorte que la valeur de consigne est régulée de telle sorte que les forces axiales générées par les deux bobines (46) sont amenées en alignement.

4. Générateur à turbine (2) selon l'une des revendications précédentes, dans lequel une variation maximale admissible dans la plage de +/- 0,5 mm est prédéterminée pour la modification de la consigne.

5. Générateur à turbine (2) selon l'une des revendications précédentes, dans lequel le dispositif de commande (90) est conçu pour faire varier la consigne lorsqu'une différence entre les courants de bobine et/ou une valeur absolue d'au moins un des courants de bobine dépasse un seuil prédéterminé.

6. Générateur à turbine (2) selon la revendication précédente, dans lequel le dispositif de commande (90) est configuré de telle sorte que la variation de la valeur de consigne est effectuée lorsque la différence entre les courants de bobine est supérieure à 20%, de préférence supérieure à 30% et en particulier dans la plage comprise entre 20% et 60% d'un courant de bobine moyen des deux bobines.

7. Générateur de turbine (2) selon l'une des revendications précédentes, dans lequel le seuil de courant pour la sortie du signal de commande (S) est compris entre 60% et 85% et notamment à 75% du courant maximal admissible de la bobine.

8. Générateur de turbine (2) selon l'une des revendications précédentes, dans lequel le dispositif de commande (90) est conçu de telle sorte que, lorsque la valeur seuil actuelle est dépassée, au moins l'une des mesures suivantes est initiée par le signal de commande (S) :
- réduction du débit du fluide (M) en contrôlant une vanne de débit pour le fluide,
- limitation et/ou réduction la vitesse actuelle
- variation des conditions de pression à l'entrée et/ou à la sortie.

9. Générateur à turbine (2) selon l'une des revendications précédentes, dans lequel un joint à labyrinthe (24) est formé en tant que dispositif d'étanchéité.

10. Générateur à turbine (2) selon l'une des revendications précédentes, **caractérisé en ce qu'**il est conçu pour une vitesse de fonctionnement comprise entre 4 000 et 40 000 tr/min et en particulier la partie de turbine a un diamètre (d) compris entre 50 mm et 500 mm.

11. Procédé de fonctionnement d'un générateur à turbine (2), qui comporte une partie de turbine (8) et une partie de générateur (10) et qui s'étend le long d'un axe de rotation de la partie de turbine (8) à la partie de générateur (10), dans lequel
- la partie de générateur (10) a une partie rotative (30) et une partie fixe (28), et la partie rotative (30) tourne à une vitesse supérieure à 4 000 tr/min,
- la partie de turbine (8) comporte une roue de turbine (16) et une entrée (20) et une sortie (22) pour un fluide (M), et un fluide (M) entre par l'entrée (20) et sort par la sortie (22),
- un dispositif d'étanchéité (24) est disposé entre la partie de turbine (8) et une partie de boîtier fixe,
- la partie de générateur (10) comporte un arbre de générateur (14) avec au moins une bague de roulement (50) et l'arbre de générateur (14) est monté par l'intermédiaire d'un palier axial (36) configuré comme un palier magnétique et, à cet effet, le palier axial (36) comporte deux bobines (46) espacées axialement l'une de l'autre, entre lesquelles la au moins une bague de roulement (50) est disposée à une distance axiale (a) respective des bobines (46),
- dans lequel la distance axiale (a) entre la au moins une bague de roulement (50) et l'une des bobines est régulée à une valeur de consigne et, à cet effet, un courant de bobine est appliqué aux bobines (46), dans lequel les bobines (46) sont conçues pour un courant de bobine maximal et dans lequel, en outre, au moins l'une des mesures suivantes est réalisée :
- la valeur de consigne est varié pour modifier l'effet d'étanchéité du dispositif d'étanchéité (24) et/ou
- lorsqu'un seuil de courant pour le courant de bobine est dépassé, un signal de commande (S) est émis pour commander l'écoulement du milieu (M) ou la vitesse du générateur à turbine (2).
